# EUROPÄISCHE PATENTSCHRIFT

(11) **EP 0 461 454 B1**
(45) Veröffentlichungstag und Bekanntmachung des Hinweises auf die Patenterteilung: **19.04.1995**
(21) Anmeldenummer: 91108580.1
(22) Anmeldetag: 27.05.1991
(51) Int. Cl.: H02B 1/26

(54) **Verteilereinrichtung**
Distribution device
Dispositif de distribution

(30) Priorität: 11.06.1990 DE 4018693; 25.09.1990 DE 4030312
(43) Veröffentlichungstag der Anmeldung: 18.12.1991
(73) Patentinhaber: SIEMENS AKTIENGESELLSCHAFT, 80333 München (DE)
(72) Erfinder: Blondeel, Geert, B-9260 Oorgegem (BE); Hauf, Günter, W-8901 Langweid/Lech (DE)

(56) Entgegenhaltungen:
- EP-A- 0 040 941
- WO-A-86/05329
- DE-A- 2 032 405
- FR-A- 2 533 769
- US-A- 4 876 713
- US-A- 4 878 858
- US-A- 4 909 757

## Beschreibung

Die Erfindung betrifft eine Verteilereinrichtung zum wahlfreien Verbinden von ankommenden mit abgehenden Leitungen mittels Verbindungsleitungen.

Es sind viele unterschiedliche Verteilereinrichtungen bekannt. So sind z. B. Einrichtungen mit Rangierverbindungen aus Rangierdrähten in lötfreier Anschlußtechnik bekannt. Darüberhinaus sind auch Verteilereinrichtungen mit Patch-Kabeln, Modular Jacks und anderen Steckverbindern in Verbindung mit Patch-Paneelen bekannt. US-A-4 909 757 offenbart eine Verteiler einrichtung mit einer Vielzahl von in einem Gestellrahmen angeordneten Verteilermodulen, wobei jedes Verteilermodul aus einer Steckbuchse besteht.

Aufgabe der vorliegenden Erfindung ist es, eine optimierte Verteilereinrichtung für Übertragungen im höheren Frequenzbereich anzugeben, welche sich sowohl durch gute Übertragungseigenschaften als auch durch eine einfache Handhabung durch den Betreiber der Einrichtung auszeichnet.

So sind z. B. Änderungen von Rangierverbindungen in lötfreier Anschlußtechnik nur von entsprechendem Fachpersonal durchzuführen, während Verteilereinrichtung mit Patch-Paneelen einen enorm aufwendigen rückseitigen Kabelanschluß aufweisen. Außerdem ist bei beiden Einrichtungen die Schirmung für Übertragungen im höheren Frequenzbereich nicht optimal.

Die obengenannte Aufgabe wird erfindungsgemäß für eine Verteilereinrichtung der eingangs genannten Art dadurch gelöst, daß die Verteilereinrichtung aus einer Vielzahl von in einem Gestellrahmen angeordneten Verteilermodulen besteht, wobei jedes Verteilermodul eine Steckbuchse aufweist, DADURCH GEKENNZEICHNET, daß jedes Verteilermodul auch ein dem Heranführen der seitlich ankommenden und abgehenden Leitungen dienendes Leitungsführungselement, und ein der Aufnahme und Beschaltung der Leitungsenden dienendes frontseitig angeordnetes Funktionselement aufweist, daß die Steckbuchse (Jack), deren Anschlüsse mit den einzelnen Anschlußklemmen des zugehörigen Funktionselementes fest verbunden sind, abgeschirmt ist und daß die einzelnen Steckbuchsen mittels mit entsprechenden Steckern (Plug) versehenen Rangierleitungen beliebig miteinander verbindbar sind.

Bei der erfindungsgemäßen Verteilereinrichtung werden die Vorteile von Verteilereinrichtungen in lötfreier Anschlußtechnik und die Vorteile von Verteilereinrichtungen mit Patch-Paneelen und Modular Jacks oder anderen Steckverbindern miteinander vereint, wobei die Erfindung auf bestehende Funktionselemente zurückgreift und diese entsprechend umwandelt. Für die ankommenden und abgehenden Leitungen wird eine lötfreie Anschlußtechnik verwendet, während die Rangierung selbst mittels konfektionierter, mit Steckern versehener Kabel erfolgt, so daß die Rangierungen auch durch Nichtfachleute ausgeführt werden können.

Eine zweckmäßige Ausgestaltung der erfindungsgemäßen Verteilereinrichtung ist dadurch gekennzeichnet, daß jeweils ein Funktionselement und die dazugehörigen Steckbuchsen von einem Schirmblech umgeben sind. Dadurch wird die noch bestehende Schirmungslücke zwischen den Leitungsenden der ankommenden und abgehenden Leitungen und den Rangierleitungen zuverlässig geschlossen.

Zur Erhöhung der Übertragungssicherheit ist eine andere vorteilhafte Ausgestaltung der erfindungsgemäßen Verteilereinrichtung dadurch gekennzeichnet, daß die Funktionselemente mit Aufnahmen für Überspannungsschutzstecker versehen sind.

Bei der erfindungsgemäßen Verteilereinrichtung kann es nachteilig sein, daß nur gleiche Übertragungsmedien, d. h. Leitungen mit gleichem Wellenwiderstand, miteinander verbunden werden können. So bestehen z. B. die überörtlichen Leitungsnetze fast immer aus symmetrischen Leitungen, während für eine daran anzuschließende Etagenverdrahtung unsymmetrische Leitungen Verwendung finden. In solchen Fällen müssen aufwendige Anpassungsstücke, die auch einen zusätzlichen Platzbedarf erfordern, verwendet werden.

Um dies zu vermeiden, ist eine weitere zweckmäßige Ausgestaltung der erfindungsgemäßen Verteilereinrichtung dadurch gekennzeichnet, daß jeder Steckbuchse ein passives Anpassungsglied mit einer koaxialen Steckvorrichtung parallel geschaltet ist.

Bei dieser Ausführungsform sind keine zusätzlichen Anpassungsstücke notwendig. Je nach Art des Anschlusses wird eine der beiden angebotenen Steckverbindungen verwendet, so daß sich ein gleichmäßiger Aufbau und eine übersichtliche Belegung ergibt.

Zur Erreichung einer durchgehend guten Schirmwirkung ist eine zusätzliche zweckmäßige Ausgestaltung der Verteilereinrichtung gemäß der vorliegenden Erfindung dadurch gekennzeichnet, daß die Schirmbleche der Steckbuchsen über großflächige Masseverbindungen mit den jeweiligen Anpassungsgliedern verbunden sind.

Nachfolgend wird die erfindungsgemäße Verteilereinrichtung anhand eines in der Zeichnung dargestellten Ausführungsbeispiels näher beschrieben.

Es zeigen
- FIG 1: eine Vorderansicht eines Verteilermoduls mit drei Steckbuchsen einer als bekannt vorausgesetzten Verteilereinrichtung,
- FIG 2: eine Seitenansicht des in FIG 1 dargestellten Verteilermoduls,
- FIG 3: eine Draufsicht des in FIG 1 und FIG 2 dargestellten Verteilermoduls,
- FIG 4: eine teilweise Vorderansicht eines Verteilermoduls einer Verteilereinrichtung gemäß der vorliegenden Erfindung, und
- FIG 5: eine Draufsicht auf das in FIG 4 dargestellte Verteilermodul.

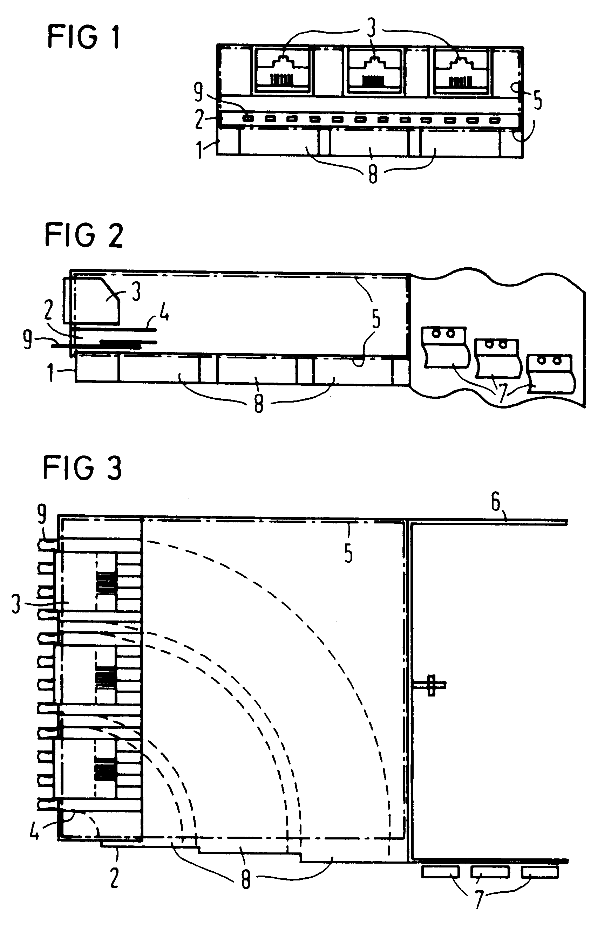

Die in den FIG 1 bis 3 dargestellte Verteilereinrichtung besteht im wesentlichen aus einem Blechgehäuse 6, an welchem mehrere Verteilermodule befestigt sind. Ein derartiges Verteilermodul ist in den FIG 1 bis 3 näher dargestellt. Im dargestellten Beispiel besitzt das Verteilermodul drei Steckbuchsen 3, jedoch kann jedes Verteilermodul auch mit weniger oder mit mehr Steckbuchsen ausgerüstet werden.

Die seitlich ankommenden Übertragungsleitungen werden durch die Drahtführungskanäle 8 zur Frontseite der Verteilermodule geführt. Zusätzlich können die ankommenden bzw. abgehenden Übertragungsleitungen mit Kabelschellen 7 am Blechgehäuse 6 befestigt sein. Die Enden der ankommenden bzw. abgehenden Übertragungsleitungen werden an den Schneidklemmkontakten 9 kontaktiert. Diese Schneidklemmkontakte 9 sind Bestandteil von Funktionselementen 2. Diese Funktionselemente 2 können verschieden ausgebildet sein, z.B. als Elemente mit oder ohne Überspannungsschutz.

Um Überspannung von den Außenleitungen ableiten zu können, ist die Kabelseite jedes Kontaktes nach hinten verlängert und bildet an der Rückseite des Funktionselementes die Kontaktstellen zur Aufnahme des Überspannungsschutzsteckers.

Die Schneidklemmkontakte 9 des Funktionselementes 2 sind fest mit einer Platine 4 verbunden, auf welcher die Steckbuchsen 3 fest montiert sind.

Zur Erhöhung der Schirmwirkung können jeweils zusammengehörige Funktionselemente und Steckbuchsen von einem Schirmblech 5 umgeben sein.

Zwei Steckbuchsen sind nun jeweils (im dargestellten Ausführungsbeispiel nicht gezeigt) mittels Rangierleitungen, die entsprechende Stecker aufweisen, miteinander verbunden. Bei diesen Rangierleitungen handelt es sich um abgeschirmte Kabel mit abgeschirmten Steckern. Auf diese Weise kann auf einfache Art und Weise jede ankommende Übertragungsleitung mit einer beliebigen abgehenden Übertragungsleitung verbunden werden.

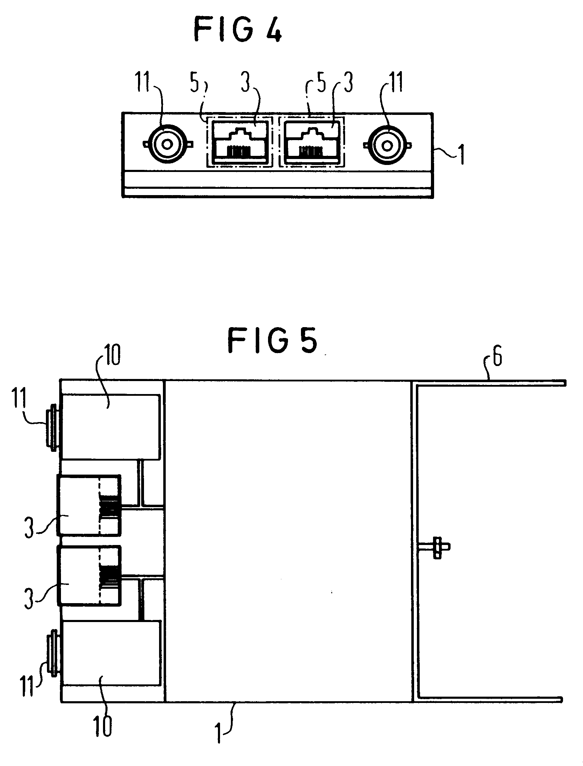

In den FIG 4 und FIG 5 ist die erfindungsgemäße Ausführungsform dargestellt, bei der zu jeder Steckbuchse ein Anpassungsglied 10 mit einer koaxialen Steckvorrichtung 11 parallel geschaltet ist. Zur Erzielung einer guten Schirmwirkung können die Schirmbleche 5 der Steckbuchsen 3 über großflächige Massenverbindungen mit den jeweiligen Anpassungsgliedern 10 verbunden werden. Als Anwendungsbeispiel sei hier der Fall angenommen, daß an ein überörtliches Verteilernetz eine Etagenverkabelung angeschlossen werden soll, wobei vorausgesetzt ist, daß es sich bei dem überörtlichen Verteilernetz um symmetrische Leitungen handelt, während es sich bei dem Etagenverteilernetz um unsymmetrische Leitungen handelt. Bei der erfindungsgemäßen Verteilereinrichtung besteht nun die Möglichkeit, je nach Anwendungsfall eine der angebotenen Steckvorrichtungen 5 oder 11 zu verwenden. Als Beispiel kann z. B. an die koaxiale Steckvorrichtung eine unsymmetrische Anschlußleitung einer Steuereinheit der Etagenverdrahtung, z. B. eines Leitungskonzentrators, an ein ankommendes symmetrisches Außenkabel angeschlossen werden.

## Patentansprüche

1. Verteilereinrichtung zum wahlfreien Verbinden von ankommenden mit abgehenden Leitungen mittels Verbindungsleitungen, welche Verteilereinrichtung aus einer Vielzahl von in einem Gestellrahmen angeordneten Verteilermodulen besteht, wobei jedes Verteilermodul eine Steckbuchse (3) aufweist, DADURCH GEKENNZEICHNET, daß jedes Verteilermodul auch ein dem Heranführen der seitlich ankommenden und abgehenden Leitungen dienendes Führungselement (1), und ein der Aufnahme und Beschaltung der Leitungsenden dienendes frontseitig angeordnetes Funktionselement (2) aufweist, daß die Steckbuchse (3), deren Anschlüsse mit den einzelnen Anschlußklemmen (9) des zugehörigen Funktionselementes (2) verbunden sind, abgeschirmt ist und daß die einzelnen Steckbuchsen (3) mittels mit entsprechenden Steckern versehenen Rangierleitungen beliebig miteinander verbindbar sind.

2. Verteilereinrichtung nach Anspruch 1,
**dadurch gekennzeichnet**,
daß jeweils ein Funktionselement (2) und die zugehörigen Steckbuchsen (3) von einem Schirmblech (5) umgeben sind.

3. Verteilereinrichtung nach Anspruch 1,
**dadurch gekennzeichnet**,
daß die Funktionselemente (2) mit Aufnahmen für Überspannungsschutzstecker versehen sind.

4. Verteilereinrichtung nach einem der Ansprüche 1 bis 3,
**dadurch gekennzeichnet,**
daß jeder Steckbuchse (3) ein passives Anpassungsglied (10) mit einer koaxialen Steckvorrichtung (11) parallel geschaltet ist.

5. Verteilereinrichtung nach Anspruch 4,
**dadurch gekennzeichnet**,
daß die Schirmbleche (5) der Steckbuchsen (3) über großflächige Masseverbindungen mit den jeweiligen Anpassungsgliedern (10) verbunden sind.

## Claims

1. Distribution device for optionally connecting incoming lines to outgoing lines by means of connecting lines, each distribution device comprising a multiplicity of distribution modules arranged in a framework, each distribution module having a socket (3), characterized in that each distribution module also has a guide element (1), serving to move into proximity the laterally incoming and outgoing lines, and a function element (2) arranged on the front side and serving to accommodate and wire the line ends, in that the socket (3), whose connections are connected to the individual connecting terminals (9) of the associated function element (2), is screened, and in that the individual sockets (3) can be connected to each other in any desired manner by means of jumper lines provided with corresponding plugs.

2. Distribution device according to Claim 1, characterized in that in each case one function element (2) and the associated sockets (3) are surrounded by a sheet-metal screen (5).

3. Distribution device according to Claim 1, characterized in that the function elements (2) are provided with accommodations for overvoltage-protection plugs.

4. Distribution device according to one of Claims 1 to 3, characterized in that a passive matching member (10) having a coaxial plug device (11) is connected in parallel to each socket (3).

5. Distribution device according to Claim 4, characterized in that the sheet-metal screens (5) of the sockets (3) are connected to the respective matching members (10) by means of large-area earth connections.

## Revendications

1. Dispositif répartiteur pour relier au choix des lignes d'arrivée à des lignes de départ au moyen de lignes de jonction, le dispositif répartiteur étant constitué par une multiplicité de modules de répartition disposés dans une baie de support, et dans lequel chaque module de répartition possède une douille d'enfichage (3), caractérisé par le fait que chaque module de répartition possède également un élément de guidage (1) pour le rapprochement des lignes qui arrivent et partent latéralement, et un élément fonctionnel (2), qui est disposé sur le côté avant et sert à la réception et au câblage des extrémités des lignes, que la douille d'enfichage (3), dont les bornes sont reliées aux bornes individuelles (9) de l'élément fonctionnel associé (2), est blindée, et que les différentes douilles d'enfichage (3) peuvent être reliées entre elles d'une manière quelconque au moyen de lignes de manipulation équipées de connecteurs correspondants.

2. Dispositif répartiteur suivant la revendication 1, caractérisé par le fait que respectivement un élément fonctionnel (2) et les douilles d'enfichage associées (3) sont entourés par une tôle de protection (5).

3. Dispositif répartiteur suivant la revendication 1, caractérisé par le fait que les éléments fonctionnels (2) comportent des logements pour un connecteur de protection contre les surtensions.

4. Dispositif répartiteur suivant l'une des revendications 1 à 3, caractérisé par le fait qu'en parallèle avec chaque douille enfichable (3) est branché un circuit passif d'adaptation (10) comportant un dispositif d'enfichage coaxial (11).

5. Dispositif répartiteur suivant la revendication 4, caractérisé par le fait que les tôles de blindage (5) des douilles d'enfichage (3) sont reliées aux circuits respectifs d'adaptation (10) par l'intermédiaire de liaisons de masse de surface étendue.
